(19) Europäisches Patentamt
European Patent Office
Office européen des brevets

(11) **EP 1 785 768 A1**

(12) **EUROPEAN PATENT APPLICATION**

(43) Date of publication:
**16.05.2007 Bulletin 2007/20**

(51) Int Cl.:
***G02F 1/167*** *(2006.01)* *G02F 1/1335* *(2006.01)*

(21) Application number: **06255788.9**

(22) Date of filing: **10.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.11.2005 JP 2005327153**
**06.11.2006 JP 2006300693**

(71) Applicant: **Bridgestone Corporation**
**Tokyo 104-8340 (JP)**

(72) Inventor: **Kita, Shinichi**
**c/o Bridgestone Corporation Technical Center**
**Kodaira-shi**
**Tokyo 187-8531 (JP)**

(74) Representative: **Whalley, Kevin**
**Marks & Clerk**
**90 Long Acre**
**London WC2E 9RA (GB)**

(54) **Information display panel**

(57) An information display panel, wherein one or more kinds of display media 3 comprising at least one kind of particle having optical reflectance and charging characteristics, are sealed in a space between two opposed substrates and 2, at least one of which is transparent, and wherein the display media, to which an electrostatic field is applied, are made to move so as to display information such as an image or the like, comprises the construction such that when a color filter 27 consisting of a certain number of colors of filters 27R, 27G and 27B being arranged is provided at the transparent substrate of a display side for color display, each end of adjacent color filters having different colors are superimposed. Herewith even when color filters are used for color display, an information display panel can be provided, whose manufacturing process can be simplified and whose cost is low.

FIG. 10
27
27R
27G
27B
2
6B
6G
6
6R
3
3B
3W
5
1
4

EP 1 785 768 A1

## Description

1. Field of the Invention

The present invention relates to an information display panel, wherein display media are sealed between two opposed substrates, at least one of which is transparent, and wherein the display media, to which an electrostatic field is applied, are made to move so as to display information such as an image or the like.

2. Description of Related Art

As an information display device substitutable for liquid crystal display (LCD), information display devices with the use of technology such as an electrophoresis method, an electro-chromic method, a thermal method, dichroic-particles-rotary method have been proposed.

These conventional techniques are considered to be useful for inexpensive visual display devices of the next generation compared with a LCD due to merits such as wider field of vision close to normal printed matter, smaller power consumption or a memory function, and expected to be spread out to information displays for portable devices, electronic paper and the like. Recently, electrophoresis method for microencapsulating dispersion liquid made up with dispersion particles and solution and disposing the liquid between opposed substrates, is proposed and expected.

However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity and it is difficult to maintain a stability of dispersion state. Even in the case of microencapsulating, the cell size is diminished to a microcapsule level in order to make it hard to show the above-mentioned drawbacks, however, an essential problem is not overcome at all.

Besides the electrophoresis method using behavior in the solution, recently, a method that electroconductive particles and a charge transport layer are installed in a part of the substrate without using solution has been proposed. [The Imaging Society of Japan "Japan Hardcopy '99" (July 21-23, 1999) Transaction Pages 249-252] However, the structure becomes complicated because the charge transport layer and further a charge generation layer are to be arranged. In addition, it is difficult to constantly charge the electro-conductive particles, and thus there is a drawback on the lack of stability.

As one method for overcoming the various problems mentioned above, an information display panel is known, wherein display media are sealed between two opposed substrates, at least one of which is transparent, or display media are sealed in cells, which are isolated each other by partition walls and wherein the display media, to which an electrostatic field is applied, are made to move so as to display information such as an image or the like.

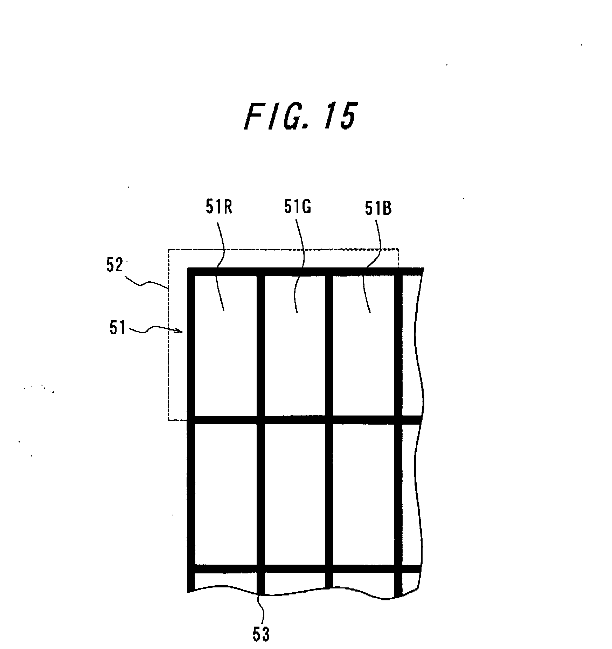

In the above-mentioned conventional information display panel, it may be thought that a color filter made up of a certain number of color of filters being arranged for color display is used. For example, a color filter 51 consisting of red (R), green (G) and blue (B) filters which are generally used, makes up one unit of display 52 by a red filter 51R, a green filter 51G and a blue filter 51B, as Fig. 15 shows an example. Black-colored black matrix 53 is formed between each filter in order to improve contrast of display color. Therefore, in the conventional color filter 51 of above configuration a process for forming black matrix 53 between each filter is required, which has caused complexity of the manufacturing process and cost increase.

## SUMMARY OF THE INVENTION

An object of the present inventions is to eliminate the problems mentioned above and to provide an information display panel, whose manufacturing process can be simplified and whose cost is low even in the case of color display with color filters.

The information panel of the present invention, wherein one or more kinds of display media comprising at least one kind of particle having optical reflectance and charging characteristics, are sealed in a space between two opposed substrates, at least one of which is transparent, and wherein the display media, to which an electrostatic field is applied, are made to move so as to display information such as an image or the like, comprises the construction such that when a color filter consisting of a certain number of colors of filters being arranged is provided at the transparent substrate of a display side for color display, each end of adjacent color filters having different colors are superimposed.

A preferred embodiment of the information display panel of the present invention is that the color filter is constituted by arranging red (R), green (G) and blue (B) filters and a unit of display is constituted by a group of red (R), green (G) and blue (B) filters, that the color filter is constituted by arranging cyan (C), magenta (M) and yellow (Y) filters and a unit of display is constituted by a group of cyan (C), magenta (M) and yellow (Y) filters, that when adjacent filters having different colors are superimposed, end portions of the filters have alternative step-like convex portions and the step-like convex portions are combined to constitute a flat color filter, that one or more kinds of display media sealed in a space between two opposed substrates, at least one of which is transparent, are two colors of display media of white display media and black display media, and the display media, to which an electrostatic field generated from electrodes provided at each of the opposed substrates is applied, are made to move perpendicularly to the panel so as to display information such as an image or the like and that partition walls divide a space between two substrates, at least one of which is transparent, into cell spaces with respect to at least one unit of display and three colors of color filters are provided on the substrate corresponding to the cells.

According to the present invention, by using a color filter consisting of adjacent filters having different colors, each end of which being superimposed, the end portion where the filters are superimposed causes color mixture by combining two colors so that the same effect as the conventional black matrix can be obtained to keep the similar excellent contrast as in the conventional panels. At the same time, without the need of providing black matrix an information display panel can be obtained, whose manufacturing process can be simplified and whose cost is low.

BRIEF DESCRIPTION OF THE DRAWINGS

[Fig. 1] Figs. 1a and 1b are schematic views respectively showing one example of the information display panel according to the present invention.

[Fig. 2] Figs. 2a and 2b are schematic views respectively showing another example of the information display panel according to the present invention.

[Fig. 3] Figs. 3a and 3b are schematic views respectively showing still another example of the information display panel according to the present invention.

[Fig. 4] Figs. 4a and 4b are schematic views respectively showing still another example of the information display panel according to the present invention.

[Fig. 5] Figs. 5a and 5b are schematic views respectively showing still another example of the information display panel according to the present invention.

[Fig. 6] Figs. 6a and 6b are schematic views respectively showing still another example of the information display panel according to the present invention.

[Fig. 7] Figs. 7a to 7d are schematic views respectively showing still another example of the information display panel according to the present invention.

[Fig. 8] Figs. 8 is a schematic view respectively showing still another example of the information display panel according to the present invention.

[Fig. 9] Figs. 9 is a schematic view respectively showing still another example of the information display panel according to the present invention.

[Fig. 10] Fig. 10 is a schematic view showing one example of the configuration according to the present invention.

[Fig. 11] Fig. 11 is a schematic view showing another example of the configuration according to the present invention.

[Fig. 12] Fig. 12 is a schematic view showing still another example of the configuration according to the present invention.

[Fig. 13] Fig. 13 is a schematic view showing still another example of the configuration according to the present invention.

[Fig. 14] Fig. 14 is a schematic view showing one example of a shape of the partition walls in the information display panel according to the present invention.

[Fig. 15] Fig. 15 is a schematic view showing one example of a color filter used in the conventional information display panels.

DESCRIPTION OF THE PREFERRED EMBODIMENT

At first, a basic construction of an information display panel according to the present invention will be explained. In the information display panel used in the present invention, an electrostatic field is applied to display media sealed in the space between two opposed substrates. Along a direction of the applied electrostatic field by means of the force of the electrostatic field, Coulomb's force or the like, the charged display media are attracted and moved by varying a direction of electrostatic field. Accordingly, information such as an image or the like can be displayed. Therefore, it is necessary to design the information display panel in such a manner that the display media can move evenly and maintain stability during a reciprocal operation or during a reserving state. Here, as to forces applied to the particles constituting display media, there are an attraction force between the particles due to Coulomb' force, an imaging force with respect to the electrodes or substrates, an intermolecular force, a liquid bonding force, a gravity and the like.

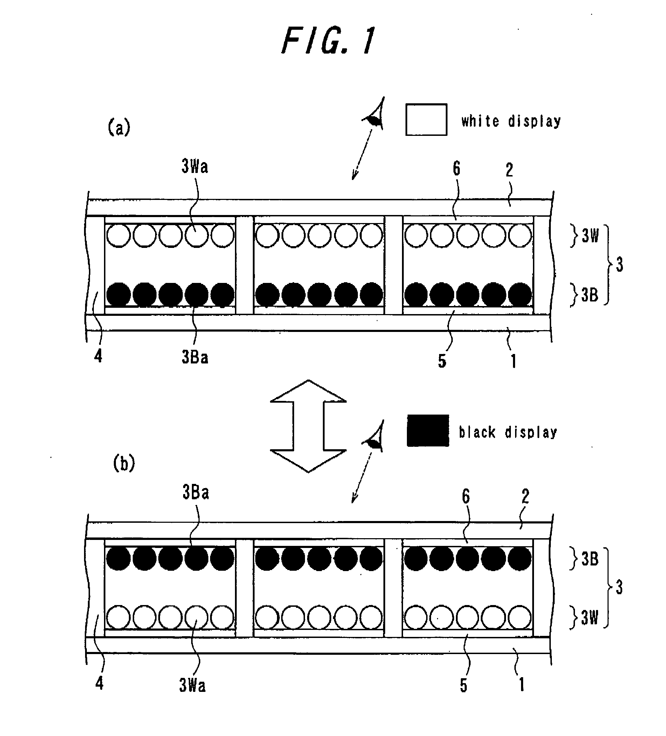

A basic constitution of the information display panel of the invention will be explained with reference to Figs. 1a and 1b - Fig. 9.

In the examples shown in Figs. 1a and 1b, at least two or more groups of display media 3 having different optical reflectance and charging characteristics and consisting of at least one or more groups of particles (here, a white particle 3W consisting of particles for white display media 3Wa and a black particle 3B consisting of particles for black display media 3Ba are shown) are moved in each cell formed by partition walls perpendicularly with respect to substrates 1 and 2, in accordance with an electric field applied between an electrode (discrete electrode) 5 arranged on the substrate 1 and an electrode (discrete electrode) 6 arranged on the substrate 2. A white color is displayed by viewing the white particle 3W to an observer as shown in Fig. 1a or a black color is displayed by viewing the black particle 3B to the observer as shown in Fig. 1b. In Figs. 1a and 1b, the partition wall arranged at a near side is omitted. The electrode may be provided outside the substrate or inside the substrate in a manner that the electrode is embedded in the substrate. If a color filter is provided in the examples, three cells shown in the figures and each RGB filter are combined to constitute one unit of display and each cell has each corresponding color filter.

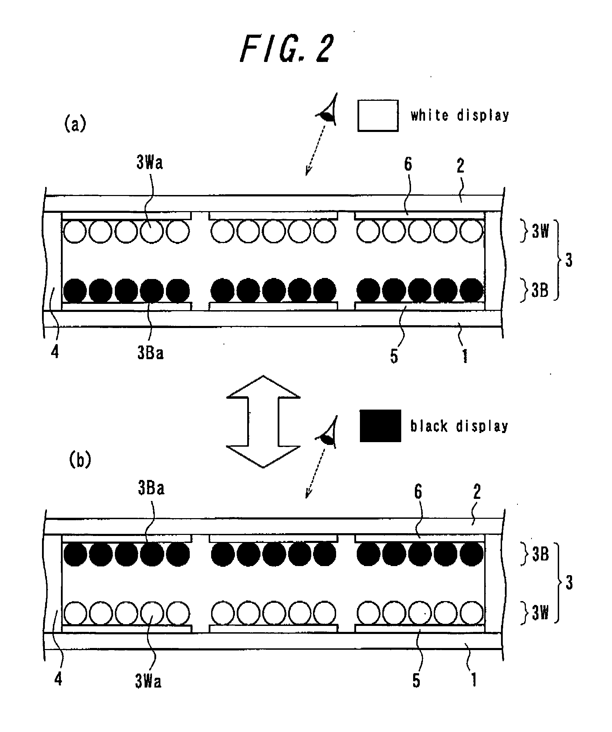

In the examples shown in Figs. 2a and 2b, partition walls are removed from the examples shown in Figs. 1a and 1b. If a color filter is provided in the examples, partition walls form a cell with respect to one unit of display constituted in combination with color filters.

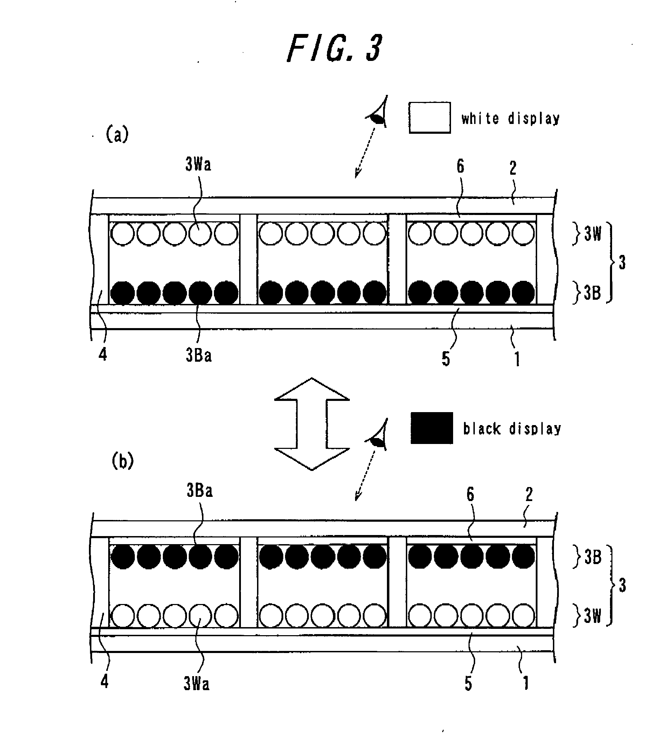

In the examples shown in Figs. 3a and 3b, at least two or more groups of display media 3 having different optical reflectance and charging characteristics and consisting of at least one or more groups of particles (here, a white particle 3W consisting of particles for white display media 3Wa and a black particle 3B consisting of particles for black display media 3Ba are shown) are moved in each cell formed by partition walls perpendicularly with respect to substrates 1 and 2, in accordance with an electric field applied between an electrode (line electrode) 5 arranged on the substrate 1 and an electrode (line electrode) 6 arranged on the substrate 2. A white color is displayed by viewing the white particle 3W to an observer as shown in Fig. 3a or a black color is displayed by viewing the black particle 3B to the observer as shown in Fig. 3b. In Figs. 3a and 3b, the partition wall arranged at a near side is omitted. The electrode may be provided outside the substrate or inside the substrate in a manner that the electrode is embedded in the substrate. If a color filter is provided in the examples, three cells shown in the figures and each RGB filter are combined to constitute one unit of display and each cell has each corresponding color filter.

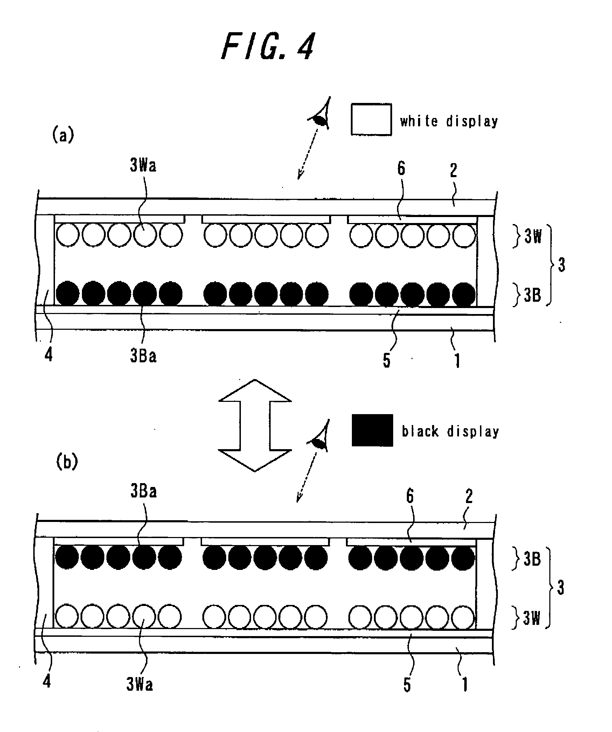

In the examples shown in Figs. 4a and 4b, partition walls are removed from the examples shown in Figs. 3a and 3b. If a color filter is provided in the examples, partition walls form a cell with respect to one unit of display constituted in combination with color filters.

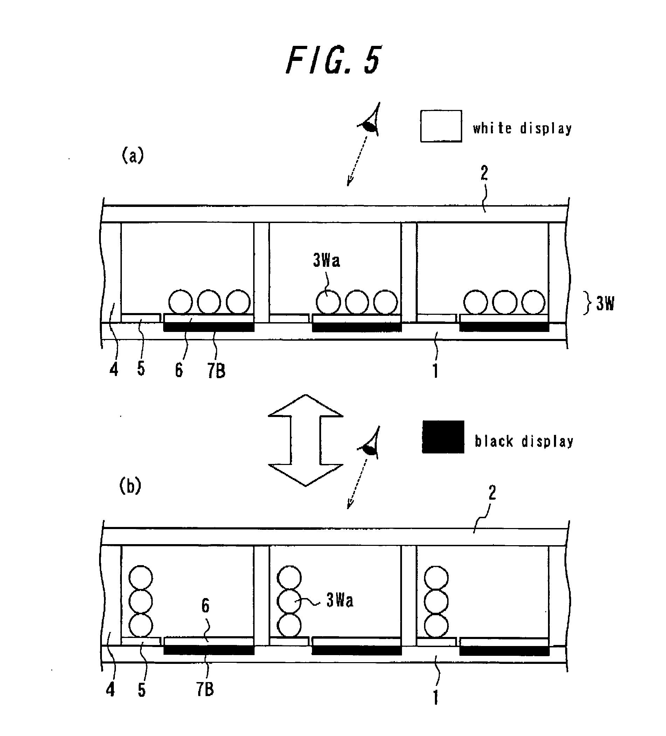

In the examples shown in Figs. 5a and 5b, display media 3 having optical reflectance and charging characteristics and consisting of at least one or more groups of particles (here, a white particle 3W consisting of particles for white display media 3Wa are shown) are moved in each cell formed by partition walls parallel with respect to substrates 1 and 2, in accordance with an electric field applied between an electrodes 5 and 6 arranged on the substrate 1. A white color is displayed by viewing the white particle 3W to an observer as shown in Fig. 5a or a black color is displayed by viewing a black plate 27B to the observer as shown in Fig. 5b. In Figs. 5a and 5b, the partition wall arranged at a near side is omitted. The electrode may be provided outside the substrate or inside the substrate in a manner that the electrode is embedded in the substrate. If a color filter is provided in the examples, three cells shown in the figures and each RGB filter are combined to constitute one unit of display and each cell has each corresponding color filter.

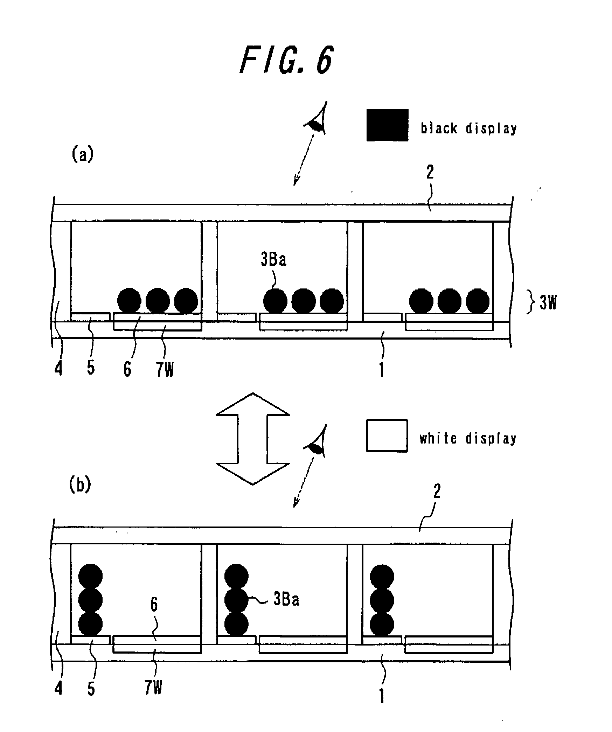

In the examples shown in Figs. 6a and 6b, black display media 3B are used instead of white display media 3W and a white plate 7W is used instead of the black plate 27B so that similar display can be obtained.

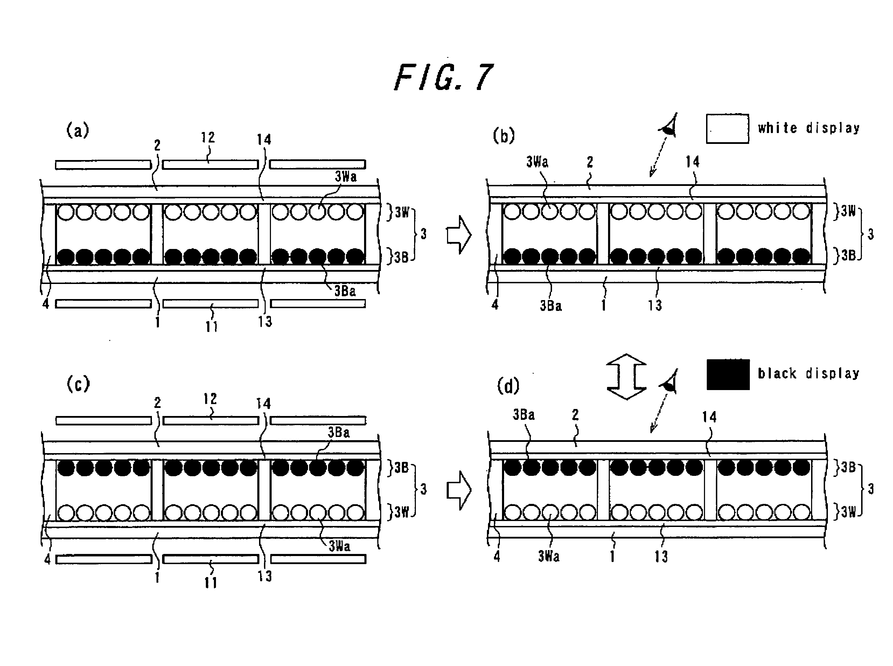

In the examples shown in Figs. 7a to 7d, as shown in Figs. 7a and 7c at least two or more groups of display media 3 having different optical reflectance and charging characteristics and consisting of at least one or more groups of particles (here, a white particle 3W consisting of particles for white display media 3Wa and a black particle 3B consisting of particles for black display media 3Ba are shown) are moved in each cell formed by partition walls perpendicularly with respect to substrates 1 and 2, in accordance with an electric field applied between an external electrical field forming means 11 arranged outside the substrate 1 and an external electrical field forming means 12 arranged outside the substrate 2. A white color is displayed by viewing the white particle 3W to an observer as shown in Fig. 7b or a black color is displayed by viewing the black particle 3B to the observer as shown in Fig. 7d. In Figs. 7a to 7d, the partition wall arranged at a near side is omitted. In addition, a conductive member 13 is arranged inside the substrate 1 and a conductive member 14 is arranged inside the substrate 2. These conductive members may not be arranged. If a color filter is provided in the examples, three cells shown in the figures and each RGB filter are combined to constitute one unit of display and each cell has each corresponding color filter.

The above explanations can be applied to a case such that the white particles 3W consisting of particles are substituted by white display media consisting of white liquid powders or a case such that the black particles 3B consisting of particles are substituted by black display media consisting of black liquid powders.

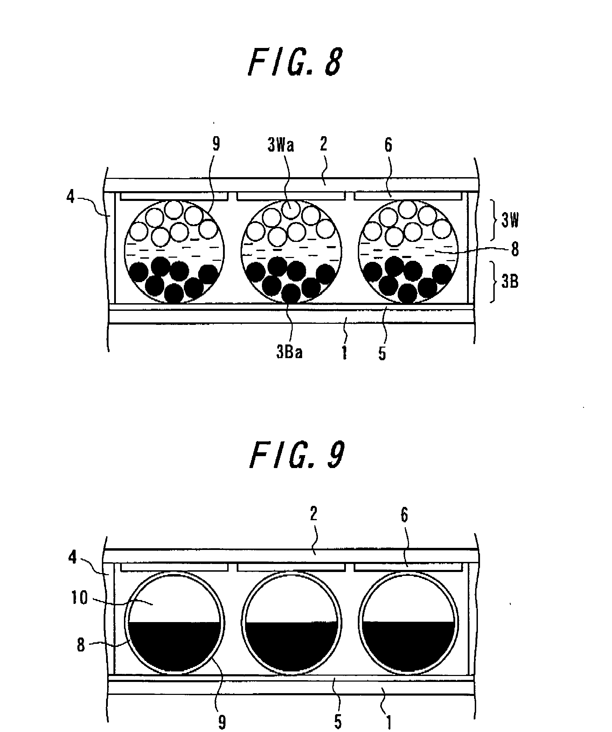

In the examples shown in Figs. 8 and 9, another examples to display white and black by using line electrodes 5 and 6 as similar to the examples shown in Figs. 4a and 4b are explained. In the example shown in Fig. 8, a microcapsule 9 filled with white display media 3W, black display media 3B and insulating liquid 8 is used instead of a cell filled with white display media 3W and black display media 3B, formed by partition walls shown in Figs. 4a and 4b. In the example shown in Fig. 9, a microcapsule 9 filled with insulating liquid 8 and a rotating ball 10, which is painted white and black with reverse polarity in halves, as display media is used instead of a cell filled with white display media 3W and black display media 3B, formed by partition walls shown in Figs. 4a and 4b. In both examples shown in Figs. 8 and 9, as similar to the example shown in Fig. 4b, white and black display can be achieved. If a color filter is provided in the examples, partition walls form a cell with respect to one unit of display constituted in combination with three microcapsules and RGB color filters.

The characteristics of the invention is that in the information display panel of the above-mentioned configuration, when a color filter consisting of a certain number of colors of filters being arranged is provided at the transparent substrate of the display side for color display, each end of the adjacent color filters having different colors are superimposed. Hereinafter, specific examples will be explained.

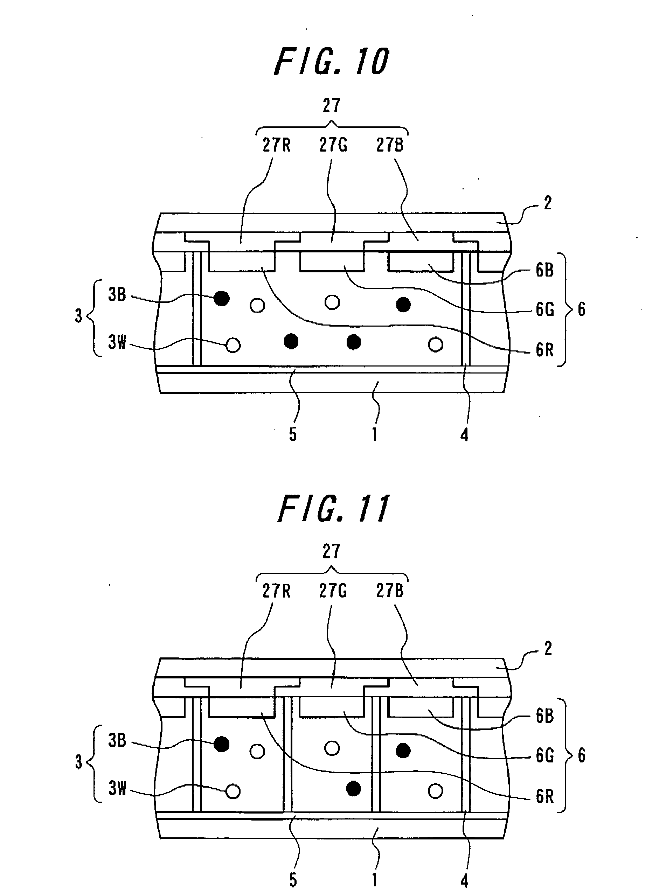

Fig. 10 is a schematic view showing one example of the configuration according to the present invention. In the example shown in Fig. 10 the same reference numerals refer to the same members shown in Figs. 1a, 1b to 9 and their explanation will be omitted. The example shown in Fig. 10 is different from the examples shown in Figs. 1a, 1b to 9 in that instead of the electrode 6 of the display side, line electrodes 6R, 6G, and 6B are arranged for red (R), green (G) and blue (B) in order to display one pixel. In the present example, in addition to this configuration, red, green and blue filters 27R, 27G and 27B are arranged between the transparent substrate 2 of the display side and electrodes 6R, 6G and 6B to provide a flat color filter 7. The end portion of each filter has alternative step-like convex portion and the step-like convex portions are combined to constitute a flat color filter 27. Partition walls 4 form a cell with respect to one unit of display constituted in combination with color filters.

Fig. 11 is a schematic view showing another example of the configuration according to the present invention. In the example shown in Fig. 11, partition walls 4 divide one unit of display constituted in combination with color filters, which is shown in Fig. 10 to form a cell with respect to each corresponding color filter. The height of two central partition walls may be shorter and insufficient than a gap between the substrates.

In the above-mentioned configuration, the step-like end portions of filters which are superimposed are disposed between electrodes 6R, 6G and 6B, where display is not contributed to and color mixture is caused by superimposing adjacent filters having different colors. Therefore, the same effect as the conventional black matrix can be obtained to keep excellent contrast. The width of superimposed portion is preferably equal or smaller than non-display area between electrodes and larger than the half of the average particle diameter. When the width of superimposed portion is larger than non-display area, brightness of the display panel is degraded. When the width of superimposed portion is smaller than the half of the average particle diameter, contrast of the display panel is degraded. In addition, there is no need for providing black matrix therefore, manufacturing process can be simplified and an information display panel can be obtained with low cost.

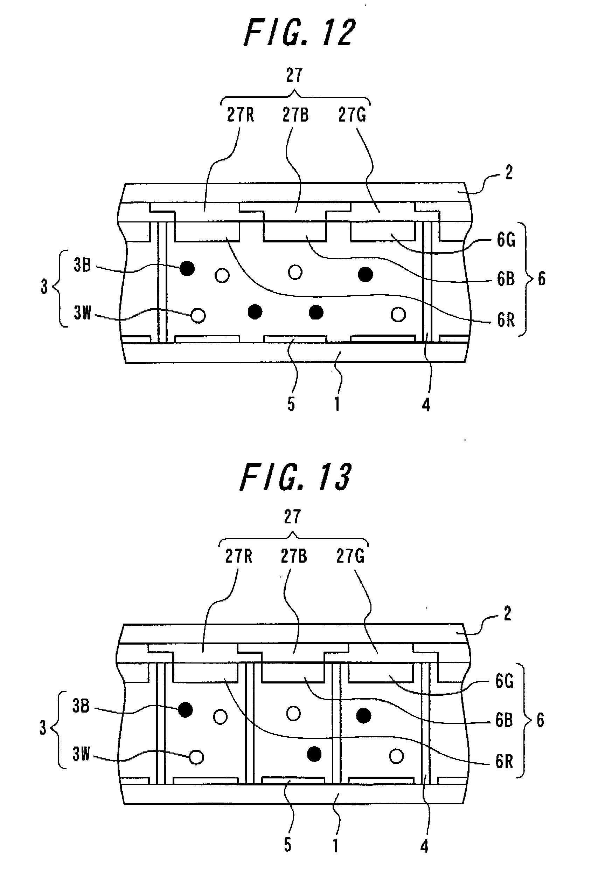

Fig. 12 is a schematic view showing still another example of the configuration according to the present invention. In the example shown in Fig. 12 the same reference numerals refer to the same members shown in Figs. 10 and 11 and their explanation will be omitted. In the example shown in Fig. 12, the shapes of RGB filters 27R, 27G and 27B, which constitute color filter 27 and each step-like end of which is combined, are different from those shown in Fig. 10. In the example shown in Fig. 12, RGB filters 27R, 27G and 27B constituting a color filter 27 are arranged in the order of 27R, 27B, and 27G and similarly discrete electrodes are arranged in the order of 6R, 6B and 6G. In both cases the similar effect can be obtained as in the examples shown in Figs. 10 and 11. Partition walls 4 form a cell with respect to one unit of display constituted in combination with color filters. Fig. 13 is a schematic view showing still another example of the configuration according to the present invention. In the example shown in Fig. 13, partition walls 4 divide one unit of display constituted in combination with color filters, which is shown in Fig. 12 to form a cell with respect to each corresponding color filter. The height of two central partition walls may be shorter and insufficient than a gap between the substrates.

In the above-mentioned examples, each end of the filters are superimposed to form step-like shapes. However the present invention is not limited to these examples and any other configurations can be used so long as each end portion of filters are superimposed to cause color mixture (dark color is preferable). In order to make the concave and convex portion where end portions of filters are superimposed smoother, a planarized layer can be provided as a protecting layer and then electrodes can be formed. In addition, in the above-mentioned examples the color filter 27 is provided inside the substrate 2, however, the present invention is not limited to this case. Moreover, in the above-mentioned examples the color configuration of color filter 27 is red, green and blue, however, the present invention is not limited to this case and a group of cyan, magenta and yellow can be used. In the above-mentioned examples, the electrode is provided inside the color filter but the placement of the electrode and the color filter may be opposite. In a panel not provided with electrode, a color filter 27 may be directly exposed and a transparent protecting layer can be provided at the surface of the color filter 27.

Hereinafter, respective members constituting the information display panel according to the invention will be explained.

As for the substrate, at least one of the substrates provided with color filters is the transparent substrate 2 through which a color of the display media 3 can be observed from outside of the information display panel, and it is preferred to use a material having a high transmission factor of visible light and an excellent heat resistance. The substrate 1 may be transparent or opaque. Examples of the substrate material include polymer sheets such as polyethylene terephthalate, polyethylene naphthalate, polyether sulfone, polyethylene, polycarbonate, polyimide or acryl and metal sheets having flexibility and inorganic sheets such as glass, quartz or the like having no flexibility. The thickness of the substrate is preferably 2 to 5000 $\mu$m, more preferably 5 to 2000 $\mu$m. When the thickness is too thin, it becomes difficult to maintain strength and distance uniformity between the substrates, and when the thickness is thicker than 5000 $\mu$m, it is inconvenient for the thin information display panel.

As for materials for forming the electrodes or conductive members provided if necessary, metals such as aluminum, silver, nickel, copper, gold and so on, conductive metal oxides such as indium tin oxide (ITO), antimony tin oxide (ATO), indium oxide, conductive tin oxide and conductive zinc oxide and so on, and conductive polymer such as polyaniline, polypyrrole, polythiophene and so on are listed and appropriately used. As the method for forming the electrode, the pattern forming method in which a thin film is formed from the above-listed materials by spattering method, vacuum vapor deposition method, CVD (chemical vapor deposition) method, and coating method, or the pattern forming method in which the mixed solution of an conductive agent with a solvent or a synthetic resin binder is applied, are used. The electrode or conductive member disposed on the substrate at the observation side (display side) should be transparent but the electrode or conductive member disposed on the back substrate may not be transparent. In both cases, above-mentioned conductive material capable of pattern forming can be preferably used. Additionally, the thickness of the electrode or conductive member is preferable to be 3 to 1000 nm, more preferable to be 5 to 400 nm so that the electro-conductivity and optical transparency can be maintained. The material and the thickness of the electrode arranged on the back substrate are similar to those of the electrode or conductive member arranged at the display side, but transparency is not necessary. In this case, the applied outer voltage may be superimposed with a direct current or an alternate current.

As for the partition wall 4 provided, a shape of the partition wall is suitably designed in accordance with a kind of the display media used for the display, a shape of disposed electrodes and a disposition and is not restricted. It is preferred to set a width of the partition wall to 2 - 100 μm more preferably 3 - 50 μm and to set a height of the partition wall to 10 - 100 μm more preferably 10 - 50 μm.

Moreover, there are a double rib method and single rib method as a method of forming the partition wall on the opposed substrates 1 and 2. In the double rib method ribs are formed on the opposed substrates respectively and then connected with each other. In the single rib method a rib is formed on one of the opposed substrates only. Both methods mentioned above may be preferably applied to the present invention.

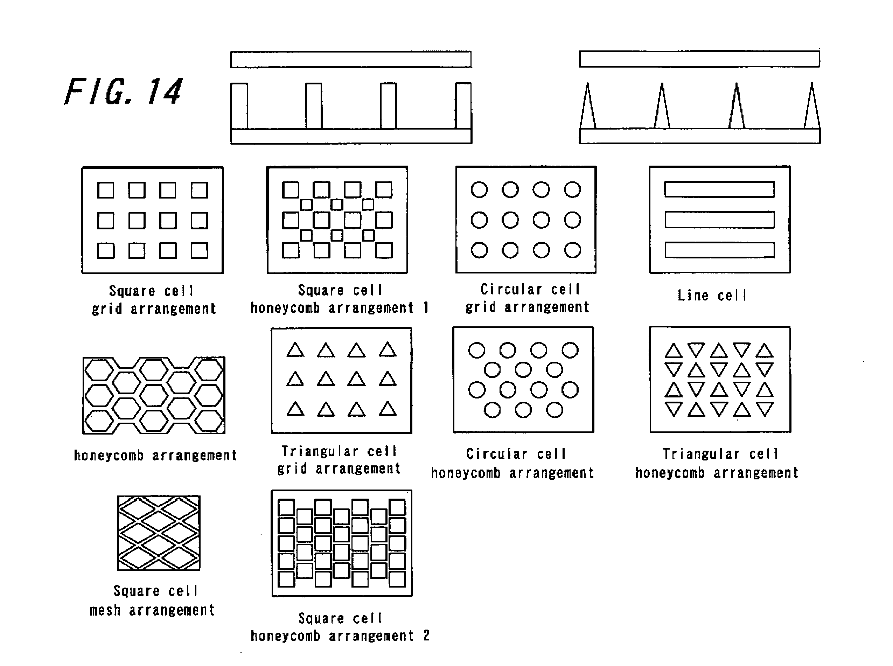

The cell formed by the partition walls each made of rib has a square shape, a triangular shape, a line shape, a circular shape and a hexagon shape, and has an arrangement such as a grid, a honeycomb and a mesh, as shown in Fig. 14 viewed from a plane surface of the substrate. It is preferred that the portion corresponding to a cross section of the partition wall observed from the display side (an area of the frame portion of the display cell) should be made as small as possible, so that sharpness of the image display can be improved.

As the formation method of the partition wall there are a die transferring method, a screen-printing method, a sandblast method, a photolithography method and an additive method. Any methods can be preferably used in the information display panel of this invention. Among them, it is preferred to use a photolithography method using a resist film and a die transferring method.

Then, the liquid powders for example used as the display media in the information display panel according to the present invention will be explained. The applicant has the right of the name of the liquid powders utilized in the information display panel of the present invention as "electric liquid powders (trade mark): registration number 4636931".

In the present invention, a term "liquid powders" means an intermediate material having both of liquid properties and particle properties and exhibiting a self-fluidity without utilizing gas force and liquid force. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass even if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powders.

That is, as is the same as the definition of the liquid crystal (intermediate phase between a liquid and a solid), the liquid powder according to the invention is a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the information display panel according to the invention, a solid material is used as a dispersant.

In the information display panel of the present invention, the liquid powders composed of a solid material stably floating as a dispersant for example in a gas and exhibiting a high fluidity in an aerosol state are sealed between two opposed substrates, at least one substrate being transparent. Such liquid powders are too fluid to measure its repose angle, which is an index indicating fluidity of powders and can be made to move easily and stably by means of Coulomb's force and so on generated by applying a low voltage.

As mentioned above, the liquid powders as the display media for example used in the present invention means an intermediate material having both of liquid properties and particle properties and exhibiting a self-fluidity without utilizing gas force and liquid force. Such liquid powders become particularly an aerosol state. In the information display panel according to the invention, the liquid powders are used in a state such that a solid material is relatively stably floating as a dispersant in a gas.

Then, an example of particles for the display media (hereinafter, sometimes refer to particles) constituting the display media in the information display panel according to the invention will be explained. The particles for the display media are used as the display media constructed by only the particles for the display media, or the display media constructed by mixing them with the other particles, or the display media constructed by controlling them into the liquid powders.

The particles include resin as a main ingredient and, according to need, charge control agent, coloring agent, inorganic additives, as is the same as the known one. Hereinafter, typical examples of resin, charge control agent, coloring agent and other additive will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the adherence to the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Though charge control agents are not particularly specified to the following examples, examples of the negative charge control agent include salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt-based compound, polyamine resin, imidazole derivatives. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen and the like can be employed as the charge control agent.

As for a coloring agent, various kinds of organic or inorganic pigments or dye with various colors as described below are usable.

Examples of black pigments include carbon black, copper oxide, manganese dioxide, aniline black, activate carbon and the like.

Examples of blue pigments include C.I. pigment blue 15: 3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, Indanthrene blue BC and the like.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, C.I. pigment red 2 and the like.

Examples of yellow pigments include chrome yellow, zinc chromate, cadmium yellow, yellow iron oxide, mineral first yellow, nickel titanium yellow, navel orange yellow, naphthol yellow S, hansa yellow G, hansa yellow 10G, benzidine yellow G, benzidine yellow GR, quinoline yellow lake, permanent yellow NCG, tartrazinelake, C.I. pigment yellow 12 and the like.

Examples of green pigments include chrome green, chromium oxide, pigment green B, C.I. pigment green 7,Malachite green lake, final yellow green G and the like.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, C.I. pigment orange 31 and the like.

Examples of purple pigments include manganese purple, first violet B, methyl violet lake and the like.

Examples of white pigments include zinc oxide, titanium oxide, antimony white, zinc sulphide and the like.

Examples of extenders include baryta powder, barium carbonate, clay, silica, white carbon, talc, alumina white and the like. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc oxide, zinc sulphide, antimony oxide, calcium carbonate, pearl white, talc, silica, calcium silicate, alumina white, cadmium yellow, cadmium red, cadmium orange, titanium yellow, Berlin blue, Armenian blue, cobalt blue, cobalt green, cobalt violet, ion oxide, carbon black, manganese ferrite black, cobalt ferrite black, copper powder, aluminum powder and the like.

Inorganic additives among these coloring agents may be used alone or in combination with two or more kinds thereof. Particularly, carbon black is preferable as the black coloring agent, and titanium oxide is preferable as the white coloring agent. The above-mentioned color agents are composed to obtain a certain color of particles for display media.

Moreover, it is preferable to use particles for display media (hereinafter, sometimes refer to particles) of the present invention, whose average particle diameter d(0.5) ranges between 1 to 20 μm and which are even. If the average particle diameter d(0.5) exceeds this range, the image sharpness is sometimes deteriorated, and, if the average particle diameter is smaller than this range, an agglutination force between the particles becomes too large to prevent the movement of the particles.

Further, in the present invention as for the particle diameter distribution, the particle diameter distribution Span, which is defined by the following formula, is less than 5 preferably less than 3:

$$\mathrm{Span} = (d(0.9) - d(0.1))/d(0.5)$$

(here, d(0.5) means a value of the particle diameter expressed by μm wherein an amount of the particles having the particle size larger than or smaller than this value is 50%, d(0.1) means a value of the particle diameter expressed by μm wherein an amount of the particles having the particle size smaller than this value is 10%, and d(0.9) means a value of the particle size expressed by μm wherein an amount of the particles having the particle size smaller than this value is 90%).

When the Span is set to no more than 5, each particle has similar particle diameter to perform an even particle movement.

Furthermore, as for a correlation between each particles, it is crucial to set a ratio of d(0.5) of the particles having smallest diameter with respect to d(0.5) of the particles having largest diameter to not more than 50 preferably not more than 10. Even if the particle diameter distribution Span is made smaller, the particles having different charge properties with each other are moved in the opposite direction. Therefore, it is preferred that the particle diameters are formed closely with each other and equivalent amounts of the particles are easily moved in the opposite direction. To this end, the above range is obtained.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution.

In the present invention, the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

A charge amount of the particle for display media properly depends upon the measuring condition. However, it has been found that the charge amount of the particle for display media in the information display panel substantially depends upon an initial charge amount, a contact with respect to the partition walls, a contact with respect to the substrates, a charge decay due to an elapsed time, and specifically a saturation value of the particles for the display media during a charge behavior is a main factor.

After various investigations by the inventors, it is found that an adequate range of the charged values of the particles for display media can be estimated by performing a blow-off method utilizing the same carrier particles so as to measure the charge amount of the particles for display media.

Further, when the display media driven in a gas space are applied to the dry type information display panel, it is important to control a gas surrounding the display media in a gap between the substrates, and a suitable gas control contributes an improvement of display stability. Specifically, it is important to set the relative humidity of the gas in the gap not more than 60% RH at 25°C, preferably not more than 50% RH.

The above gap means a gas portion surrounding the display media obtained by substituting occupied portions of the electrodes 5, 6 (in the case of arranging the electrodes inside the substrates), the display media 3, the partition walls 4 (in the case of arranging the partition wall), the color filter 27 (in the case of arranging the color filter inside the substrate) and a seal portion of the information display panel from the space between the opposed substrates 1 and 2 shown in Figs. 1a and 1b to 9.

A kind of the gas in the space is not limited as long as it has the humidity mentioned above, but it is preferred to use dry air, dry nitrogen gas, dry argon gas, dry helium gas, dry carbon dioxide gas, dry methane gas and so on. It is necessary to seal this gas in the information display panel so as to maintain the humidity mentioned above. For example, it is important to perform the operations of filling the display media and assembling the information display panel under an atmosphere having a predetermined humidity and to apply a seal member and a seal method for preventing a humidity inclusion from outside.

In the information display panel of the invention, the gap between the substrates may be adjusted so that the display media can be moved to maintain the contrast. The gap is adjusted normally to 10 - 500 μm, preferably 10 - 200 μm.

The volume occupied rate of the display media in a space of the gas between the opposed substrates is preferably 5 - 70 %, more preferably 5 - 60 %. If the volume occupied rate of the display media exceeds 70 %, the display media may become difficult to move, and if it is less than 5 %, a sufficient contrast cannot be obtained and a sharp image display is not performed.

The information display panel according to the invention is preferably applicable to the unit of display for mobile equipment such as notebook personal computers, PDAs (Personal Digital Assistants), cellular phones, handy terminals and so on; to the electric paper such as electric books, electric newspapers, electric manual (instruction) and so on; to the bulletin boards such as signboards, posters, blackboards (whiteboards) and so on; to the image unit of display for electric calculator, home electric application products, auto supplies and so on; to the card unit of display such as point cards, IC cards and so on; and to the unit of display for electric advertisements, electric POPs (Point of Presence, Point of Purchase advertising), electric price tags, electric shelf tags, electric musical score, RF-ID device and so on. In addition, the information display panel according to the invention is preferably used as an information display panel, wherein display is rewritten by means of external electric field forming means, i.e. a rewritable paper.

As a driving method of the information display panel according to the invention, there are various types of drive systems such as passive matrix drive system and static drive system, by which a panel itself doesn't have switching elements, active matrix system, by which a panel has three-terminal switching elements represented by a thin-film transistor (TFT) or two-terminal switching elements represented by a thin-film diode (TFD), and external electric field drive system using external electric field forming means.

## Claims

1. An information display panel, wherein one or more kinds of display media comprising at least one kind of particle having optical reflectance and charging characteristics, are sealed in a space between two opposed substrates, at least one of which is transparent, and wherein the display media, to which an electrostatic field is applied, are made to move so as to display information such as an image or the like, comprising the construction such that when a color filter consisting of a certain number of colors of filters being arranged is provided at the transparent substrate of a display side for color display, each end of adjacent color filters having different colors are superimposed.

2. The information display panel according to claim 1, wherein the color filter is constituted by arranging red (R), green (G) and blue (B) filters and a unit of display is constituted by a group of red (R), green (G) and blue (B) filters.

3. The information display panel according to claim 1, wherein the color filter is constituted by arranging cyan (C), magenta (M) and yellow (Y) filters and a unit of display is constituted by a group of cyan (C), magenta (M) and yellow (Y) filters.

4. The information display panel according to one of claims 1 to 3, wherein when adjacent filters having different colors are superimposed, end portions of the filters have alternative step-like convex portions and the step-like convex portions are combined to constitute a flat color filter.

5. The information display panel according to one of claims 1 to 4, wherein one or more kinds of display media sealed in a space between two opposed substrates, at least one of which is transparent, are two colors of display media of white display media and black display media, and the display media, to which an electrostatic field generated from electrodes provided at each of the opposed substrates is applied, are made to move perpendicularly to the panel so as to display information such as an image or the like.

6. The information display panel according to one of claims 1 to 5, wherein partition walls divide a space between two substrates, at least one of which is transparent, into cell spaces with respect to at least one unit of display and three colors of color filters are provided on the substrate corresponding to the cells.

FIG. 1
(a)
white display
3Wa
6
2
3W
3
3B
4
3Ba
5
1
black display
(b)
3Ba
6
2
3B
3
3W
4
3Wa
5
1

FIG. 2
(a)
white display
3Wa
6
2
3W
3
3B
4
3Ba
5
1
black display
(b)
3Ba
6
2
3B
3
3W
4
3Wa
5
1

(a)
white display
3Wa
6
2
3W
3
3B
4
3Ba
5
1
black display
(b)
3Ba
6
2
3B
3
3W
4
3Wa
5
1

FIG. 4

(a)
white display
3Wa
6
2
3W
3
3B
4
3Ba
5
1
(b)
black display
3Ba
6
2
3B
3
3W
4
3Wa
5
1

FIG. 5

white display
(a)
2
3Wa
3W
4
5
6
7B
1
black display
(b)
2
6
3Wa
4
5
7B
1

FIG. 6
black display
(a)
2
3Ba
3W
4
5
6
7W
1
white display
(b)
2
3Ba
6
4
5
7W
1

FIG. 7
(a)
(b)
(c)
(d)
white display
black display
3W
3B
3
3Wa
3Ba
1
2
4
11
12
13
14

F/G. 8

9
3Wa
2
6
4
3W
8
3B
3Ba
1
5

F/G. 9

2
6
4
10
8
9
5
1

FIG. 10

27
27R
27G
27B
2
6B
6G
6
6R
3B
3
3W
5
1
4

FIG. 11

27
27R
27G
27B
2
6B
6G
6
6R
3B
3
3W
5
1
4

FIG. 12

27
27R
27B
27G
2
6G
6B
6R
6
3B
3W
3
5
1
4

FIG. 13

27
27R
27B
27G
2
6G
6B
6R
6
3B
3W
3
5
1
4

Square cell
grid arrangement
honeycomb arrangement
Square cell
mesh arrangement
Square cell
honeycomb arrangement 1
Triangular cell
grid arrangement
Square cell
honeycomb arrangement 2
Circular cell
grid arrangement
Circular cell
honeycomb arrangement
Line cell
Triangular cell
honeycomb arrangement

FIG. 14

*FIG. 15*

51R
51G
51B
52
51
53

European Patent Office

# EUROPEAN SEARCH REPORT

Application Number
EP 06 25 5788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 02/103661 A (IBM [US]; TSUJIMURA TAKATOSHI [JP]; MIWA KOHICHI [JP]; MOROOKA MITSUO) 27 December 2002 (2002-12-27)<br>* figures 1,2,5 *<br>* abstract *<br>----- | 1-3,5,6<br>4 | INV.<br>G02F1/167<br><br>ADD.<br>G02F1/1335 |
| Y | US 2004/201798 A1 (YEH SHENG-SHIOU [TW] ET AL) 14 October 2004 (2004-10-14)<br>* paragraph [0036] *<br>* figure 2 *<br>----- | 4 | |
| A | US 2003/043318 A1 (KIM DONG-GYU [KR]) 6 March 2003 (2003-03-06)<br>* paragraph [0046] *<br>* paragraph [0061] *<br>* figure 6 *<br>----- | 4 | |
| A | JP 04 070601 A (KONISHIROKU PHOTO IND) 5 March 1992 (1992-03-05)<br>* abstract *<br>----- | 1-6 | TECHNICAL FIELDS SEARCHED (IPC) |
| A | WO 03/075087 A (BRIDGESTONE CORP [JP]; MASUDA YOSHITOMO [JP]; YAKUSHIJI MANABU [JP]; M) 12 September 2003 (2003-09-12)<br>* the whole document *<br>----- | 1-6 | G02F |

The present search report has been drawn up for all claims

| Place of search | Date of completion of the search | Examiner |
|---|---|---|
| Munich | 19 February 2007 | Girardin, François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

2

## ANNEX TO THE EUROPEAN SEARCH REPORT ON EUROPEAN PATENT APPLICATION NO. EP 06 25 5788

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2007

| Patent document cited in search report | | Publication date | Patent family member(s) | | Publication date |
|---|---|---|---|---|---|
| WO 02103661 | A | 27-12-2002 | TW 226521 | B | 11-01-2005 |
| US 2004201798 | A1 | 14-10-2004 | TW 231382 | B | 21-04-2005 |
| US 2003043318 | A1 | 06-03-2003 | JP 2003075820 | A | 12-03-2003 |
| | | | KR 20030018619 | A | 06-03-2003 |
| JP 4070601 | A | 05-03-1992 | NONE | | |
| WO 03075087 | A | 12-09-2003 | AU 2003213409 | A1 | 16-09-2003 |
| | | | CN 1646980 | A | 27-07-2005 |
| | | | EP 1482354 | A1 | 01-12-2004 |
| | | | US 2006033849 | A1 | 16-02-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Japan Hardcopy '99. *The Imaging Society of Japan,* 21 July 1999, 249-252